# EUROPEAN PATENT SPECIFICATION

(11) **EP 1 210 286 B1**
(45) Date of publication and mention of the grant of the patent: **03.10.2007**
(21) Application number: 01921725.6
(22) Date of filing: 17.04.2001
(51) Int. Cl.: B66F 9/06, B66F 9/075, B62D 7/09

(54) **A FORKLIFT TRUCK WITH REDUCED TURNING RADIUS AND WITH MEANS TO FACILITATE MAINTENANCE**
GABELSTAPLER MIT GERINGEREM WENDERADIUS UND MIT MITTELN ZUR VEREINFACHUNG DER WARTUNGSARBEITEN
CHARIOT ELEVATEUR A RAYON DE BRAQUAGE REDUIT ET AVEC DES MOYENS POUR FACILITER LA MAINTENANCE

(30) Priority: 21.04.2000 IT BO000232
(43) Date of publication of application: 05.06.2002
(73) Proprietor: Cesab Carrelli Elevatori S.P.A., 40132 Bologna (IT)
(72) Inventor: TARTARA, Giampiero, I-40017 S. Giovanni in Persiceto (IT)
(74) Representative: Lanzoni, Luciano
(86) International application number: PCT/IB2001/000670
(87) International publication number: WO 2001/081235

(56) References cited:
- EP-A- 0 741 069
- EP-A- 0 888 951
- US-A- 4 342 470
- US-A- 4 471 975

## Description

### Technical Field

The present invention relates to a forklift truck with reduced turning radius.

In particular, the invention relates to a four-wheeled forklift truck with relatively reduced minimum turning radius.

### Background Art

Conventional forklift trucks comprise a three- or four-wheeled vehicle which may be electrically powered or driven by an internal combustion engine, two horizontal, power-driven forks which extend from the front of the vehicle and are used to lift and lower loads of various kinds, and a rear counterweight to counterbalance the front load.

These forklift trucks, irrespective of their lifting capacities, come in different designs and have distinct characteristics depending on the number of wheels and on whether they have front or back wheel drive.

In forklift trucks with three wheels, two of the three wheels are mounted at the front on a single axis of rotation, while the third wheel is mounted at the back in a longitudinal plane through the centre of the vehicle. Steering is always applied to the back wheel while vehicle drive may be front or back wheel.

In lift trucks where the back wheel is not only the steerable wheel but also the drive wheel, the two front wheels are free to turn about their axes and their direction and speed depend on the steer angle of the back wheel. When the back wheel is at full steering lock, that is to say, turned by 90 degrees, the centre of rotation of the vehicle is located at the point where the common axis of the front wheels intersects the longitudinal central plane of the vehicle. This means the turning radius is relatively small, with obvious advantages in terms of manoeuvrability in confined spaces.

In a lift truck of this kind, the transmission of torque to the ground depends on the vertical load acting on the back wheel, which is the drive wheel. When the truck is carrying a load on the forks, which are at the front, the total vertical load on the back wheel is reduced, thus reducing the grip of the back wheel. The more slippery the ground (as when it is wet, for example) the more this problem is felt.

Instead, if the back wheel is only a steerable wheel and drive is at the front wheels, two different cases can be distinguished: in one case, the front wheels are equipped with a differential; in the other, the front wheels are independently driven.

In the first case, as the back wheel steer angle gets larger, the inside front wheel tends to slow down since it is forced to cover a path whose curvature is smaller than that of the path covered by the outside front wheel. When the maximum steer angle is reached, the inside front wheel does not revolve at all.

At the same time, the vehicle's centre of rotation, which lies on the common axis of the front wheels, can vary from an infinitely distant lateral position, when the front wheels are straight, to a limit position corresponding to the point where the inside front wheel touches the ground when the front wheels are at full steering lock.

It follows that in this case, the minimum turning radius is relatively large.

In the second case, the front wheels are usually driven by two electrical motors. The speed and direction of the wheels are electronically controlled by a control unit in accordance with the steer angle of the back wheel. Thus, when the back wheel is at full steering lock, the control unit causes the inside drive wheel to revolve at the same speed as the outside drive wheel but in the opposite direction so as to prevent the wheels from slipping and sliding. By so doing, the control unit advantageously enables the vehicle to turn about a point where the common axis of the front wheels intersects the longitudinal central plane of the vehicle. This provides the same manoeuvrability as the back wheel drive truck described above but avoids the problem of reduced grip when heavy loads are being carried.

A three-wheeled truck of this kind, despite its relatively reduced turning radius and good ground grip, is relatively unstable compared to a four-wheeled truck. As taught by prior art, the vertical projection of the truck's centre of gravity must fall within an area which, in the case of this type of truck, is delimited by the triangle defined by the three wheels, otherwise the truck will tip over. Clearly, such an area is smaller than the corresponding rectangular or trapezoidal area of a four-wheeled truck.

In conventional four-wheeled lift trucks, drive is typically on the front wheels, while steering is applied to the back wheels.

The rotation of each of the two back wheels is obviously coordinated with the rotation of the other back wheel in such a way as to prevent the wheels from slipping and sliding.

As in the case of three-wheel configurations, the front wheels may be driven through a differential or independently of each other as described above.

In the case of separate front wheel drive, the prior art describes a steering mechanism which, when at full lock, advantageously positions the vehicle's centre of rotation to the point where the common axis of the front wheels intersects the longitudinal central plane of the truck. This confers the same manoeuvrability as three-wheeled trucks.

The back end of a forklift truck of this type, described by the prior art, is quite complex and this not only complicates truck assembly procedures but also makes maintenance of the steering mechanism more difficult.

In particular, these forklift trucks have a counterweight-rear axle-steering mechanism assembly where the positions of the parts of the assembly relative to each other and of the assembly itself relative to the frame are such as to hamper assembly and maintenance operations. One of these forklift trucks is disclosed in document US4471975 which comprises a mounting arrangement for pivotally connecting a counterweight and a steering axle assembly to a trunnion shaft of the vehicle which eliminates the problems of removal of both of the counterweight and the steering axle assembly when only one needs to be removed.

### Disclosure of the Invention

The present invention has for an object to provide an improved forklift truck.

Accordingly, the invention provides a forklift truck with reduced turning radius according to the independent claim. Preferred embodiments are defined in dependent claims 2 to 7.

The invention will now be described with reference to the accompanying drawings which illustrate a preferred embodiment of it purely by way of example and in which:
Figure 1 is a schematic plan view of the forklift truck with reduced turning radius according to the present invention, shown with the steering at full lock;
Figure 2 is a schematic plan view of the forklift truck according to the present invention in condition in which it is travelling forward in a straight line;
Figure 3 is a rear view, with some parts in cross section and some parts cut away for clarity, of an embodiment of the forklift truck according to the present invention;
Figure 4 is a plan view, with some parts in cross section and some parts cut away for clarity, of the back end of the forklift truck illustrated in Figure 3;
Figure 5 is an enlargement of Figure 4, with a dashed line showing also the back end of the truck when the steering is at full lock;
Figure 6 is a side sectional view, through line VI-VI and with some parts cut away for clarity, of the structure illustrated in Figure 4;
Figure 7 is a another rear view, with some parts in cross section and some parts cut away for clarity, of an embodiment of the forklift truck according to the present invention; and
Figure 8 is a cross section, through line VIII-VIII and with some parts cut away for clarity, of the forklift truck illustrated in Figure 7.

With reference to the accompanying drawings, the numeral 1 denotes in its entirety a four-wheeled forklift truck with reduced turning radius.

The forklift truck 1 comprises a frame 2, two front drive wheels 3a and 3b and two back steerable wheels 4a and 4b, and two horizontal front forks (of known type and therefore not illustrated) which are power-driven (in known manner and therefore not illustrated) in such a way that they can lift and lower loads of various kinds (not illustrated).

The front wheels 3a and 3b are driven independently of each other (in known manner) by two respective transmission motors 41 and 42, and are mounted on the frame 2 in such a way that they rotate about a first common fixed axis of rotation A transversal to a longitudinal central plane M of the truck 1.

The hub 5 of each back wheel 4a, 4b has a substantially horizontal axis of rotation 6 and is rotatably supported by a hub mounting 7, which is squarely fitted to a lower end 8 of a branch 9 of a corresponding back wheel mounting fork 10.

The branch 9 is positioned so that it faces the inner surface of the hub 5 and constitutes a lower portion of the wheel mounting fork 10, which is made in a single part and which, above the branch 9 itself, has a central portion consisting of a substantially cylindrical body 11.

The body 11 has a central axis of rotation 12, which is aligned with the inner surface of the hub 5, substantially parallel to the plane M, and is rotatably mounted on a lateral end 13 of a rear axle 14, which is in turn mounted on the frame 2 transversely to the plane M and extends between the two back wheels 4a and 4b over the two wheels 4a, 4b themselves. Looking in more detail, the body 11 is mounted on the axle 14 on corresponding bearings 15. The latter are positioned inside a joint 16 that is relatively long in the direction of the axis 12 so as to confer on the body 11 relatively high resistance to the shocks transmitted by the branch 9.

Above the body 11, the wheel mounting fork 10 also has an upper portion consisting of a pin 17 which actuates the mounting fork 10 itself.

The pin 17 has a grooved profile 18 by which its top end is slotted to a lever 19 for actuating the wheel mounting fork 10.

The lever 19 is pivoted to an end 20 of a curved connecting rod 21 which is shaped like a circular arc and whose opposite end 22 is pivoted to the operating end 23 of a hydraulic cylinder 24 (of known type) for steering the wheels 4a and 4b.

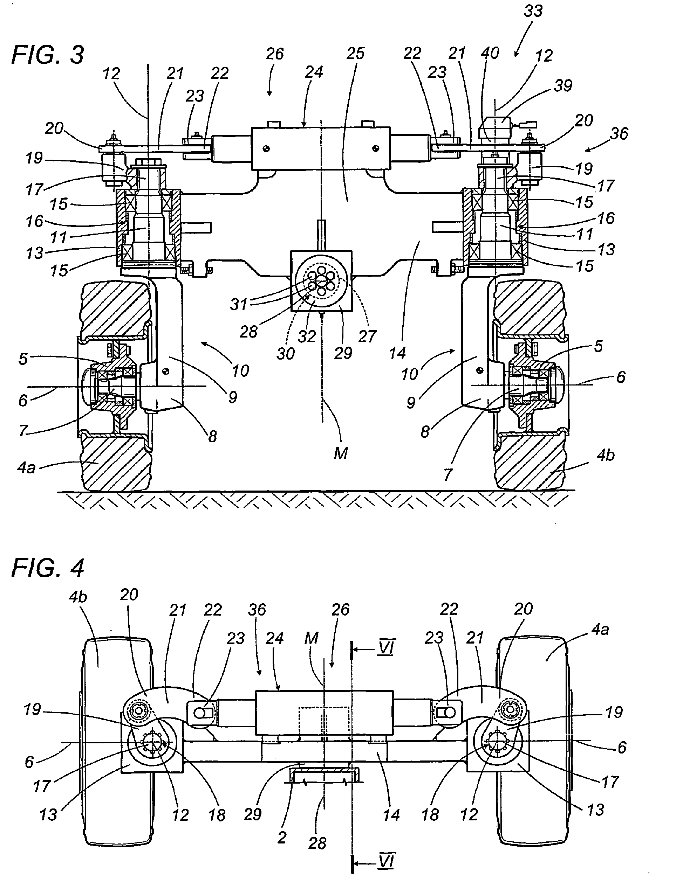

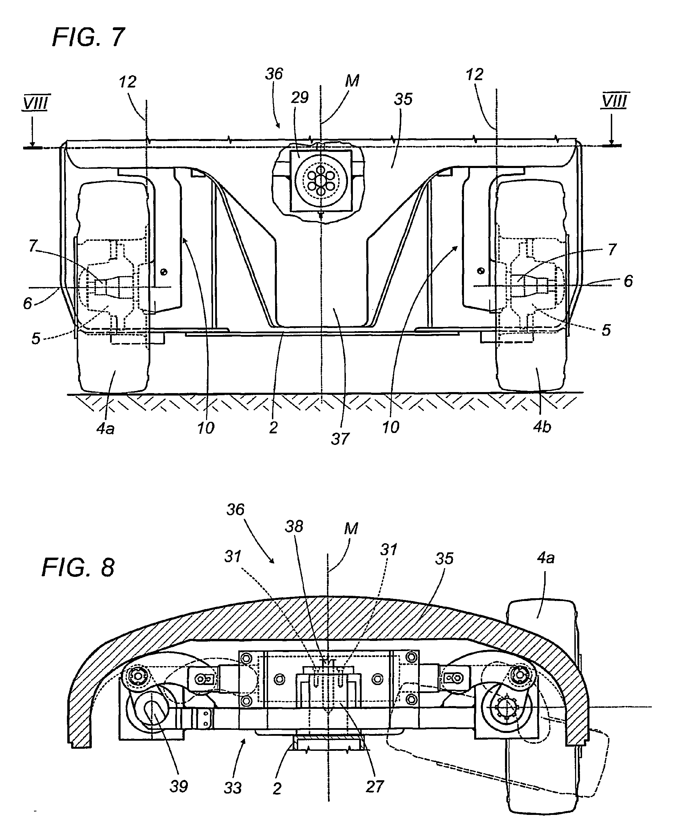

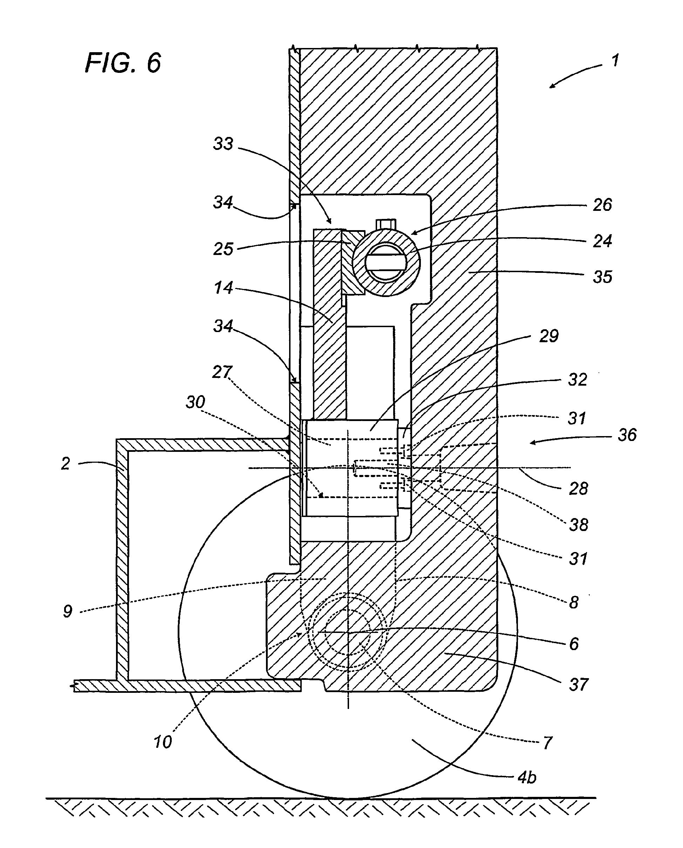

As shown in Figures 3 and 6, the steering cylinder 24 is rigidly attached to an upper end portion 25 of the axle 14.

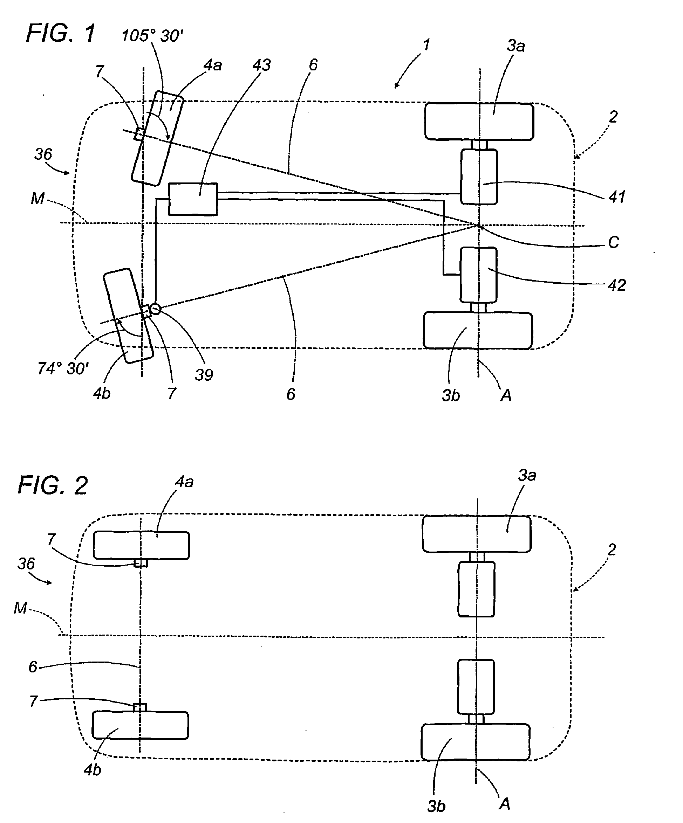

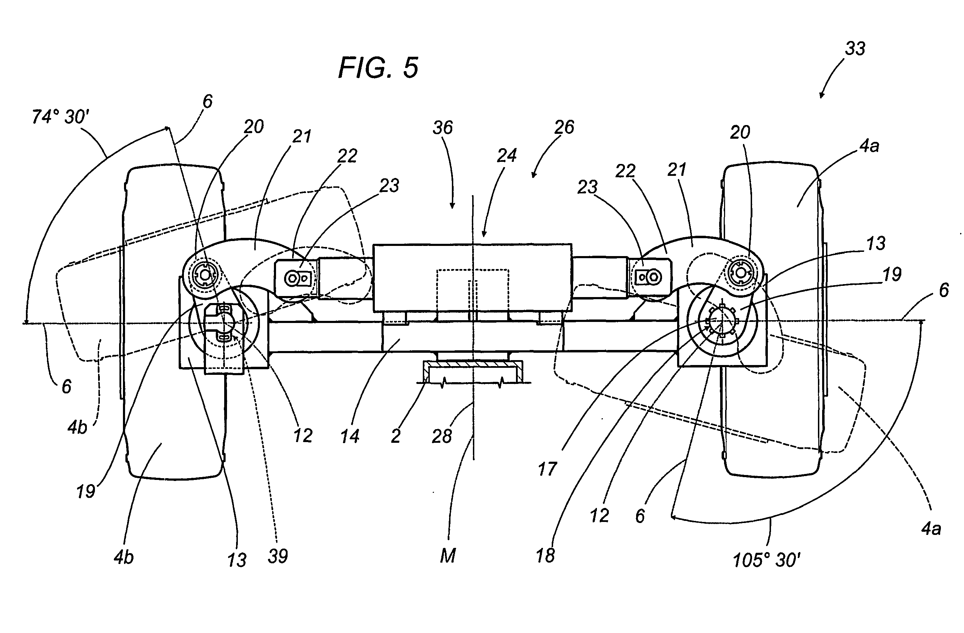

The specially shaped assembly formed by the steering cylinder 24, the connecting rods 21 and the levers 19 constitutes a steering device 26 designed to coordinate the angles of rotation of the back wheel mounting forks 10 about their respective axes 12 in such a way as to prevent the wheels 4a and 4b from slipping or sliding, and to enable the truck 1 to reach a full steering lock configuration in which the centre of rotation C of the truck 1 coincides with the point where the axis A intersects the plane M. Looking in more detail, this configuration, shown in Figure 1 and by the dashed line in Figure 5, corresponds to a rotation of 74 degrees and 30 minutes by the outside back wheel 4a, 4b and of 105 degrees and 30 minutes by the inside back wheel 4a, 4b relative to the configuration shown in Figure 2, where the wheels are straight.

The axle 14 is made from sheet metal parts welded to each other and is pivotally mounted on a rear circular pin 27 of the frame 2 extending in the longitudinal direction of the truck 1 along a horizontal axis 28. Looking in more detail, the axle 14 has below it a parallelepiped-shaped block 29. In the latter there is a circular through hole 30 by which the pin 27 is connected by means of a plurality of bolts 31 arranged in a ring to a round closing plate 32 placed on the side of the frame 2 opposite the axle 14. The axle 14, the steering device 26, the mounting forks 10 and the wheels 4a and 4b can be pre-assembled to form a unit 33 that is easily fitted en bloc to the frame 2, which, as shown in Figure 6, besides directly supporting said unit 33 through the pin 27, has, above the pin 27 itself, an opening 34 providing access to the steering device 26 when maintenance is required. The truck 1 further comprises a counterweight 35 consisting of a single part which closes the back end 36 of the truck 1. Looking in more detail, with reference to Figure 7, the counterweight 35 extends right across the width of the truck 1 and has a lower portion 37 which extends downwards between the wheels 4a and 4b and which is suitably tapered towards the centre to allow the mounting forks 10 to rotate about the axes 12 under the action of the steering device 26.

The counterweight 35 is supported directly by the frame 2 and is attached to the pin 27 by a bolt 38 located at the centre of the ring of bolts 31. The counterweight 35 is mounted in a position such that the unit 33 is placed between the pin 27 and the counterweight 35 itself. In other terms, in this position, the axle 14 and the steering device 26 are surrounded by the counterweight 35 only on the sides (Figure 8), top and bottom (Figure 6). This makes it possible to fit or remove the counterweight 35 independently of the axle 14 and of the steering device 26, while at the same time allowing access to the steering device 26 through the opening 34 without removing the counterweight 35. As mentioned above, the truck 1 is driven by the front wheels 3a and 3b which are in turn driven independently of each other by two respective transmission motors 41 and 42 controlled electronically in known manner by a control unit 43 which controls both their speed and direction in accordance with the steer angles of the back wheels 4a and 4b. For this purpose, the input of the control unit 43 is connected to a rotary type potentiometer 39 fitted above one of the two pins 17 (in this particular case, as shown in Figures 1, 3, 5 and 8, above the pin 17 corresponding to the back right-hand wheel 4b), the potentiometer spindle 40 being coaxial and attached to the pin 17 itself. The potentiometer 39 detects the steer angle of one of the wheels 4a or 4b through the connection to the pin 17 and outputs a signal to the control unit 43 which accordingly regulates the speed and direction of rotation of the motors 41 and 42. The potentiometer 39, being of the rotary type, permits accurate detection of the steer angle of the back wheels 4a and 4b and thus precise control of the transmission motors 41 and 42 that drive the front wheels 3a and 3b.

### Key

- 1: FORKLIFT TRUCK
- 2: FRAME
- 3: FRONT WHEELS
- 4: BACK WHEELS
- 5: HUB
- 6: HUB AXIS
- 7: HUB MOUNTING
- 8: LOWER END OF 9
- 9: BRANCH OF 10
- 10: WHEEL MOUNTING FORK
- 11: CENTRAL PORTION (BODY) OF 10
- 12: AXIS OF 11
- 13: LATERAL END OF 14
- 14: AXLE
- 15: BEARINGS
- 16: JOINT
- 17: PIN OF 10
- 18: GROOVED PROFILE
- 19: LEVER FOR ACTUATING WHEEL MOUNTING FORK
- 20: END OF 21
- 21: CONNECTING ROD
- 22: END OF 21
- 23: END OF 24
- 24: STEERING CYLINDER
- 25: UPPER PORTION OF 14
- 26: STEERING DEVICE
- 27: FRAME PIN
- 28: AXIS OF 27
- 29: LOWER BLOCK OF 14
- 30: HOLE IN 29
- 31: BOLTS
- 32: ROUND PLATE
- 33: PRE-ASSEMBLED UNIT
- 34: FRAME OPENING
- 35: COUNTERWEIGHT
- 36: BACK END OF 1
- 37: LOWER PORTION OF 35
- 38: BOLT
- 39: POTENTIOMETER
- 40: SPINDLE OF 39
- 41,42: TRANSMISSION MOTORS
- 43: CONTROL UNIT

## Claims

1. A forklift truck with reduced turning radius comprising; a frame (2); two front drive wheels (3a, 3b) mounted on said frame (2) in such a way that they rotate about a first common axis of rotation (A) transversal to a longitudinal central plane (M) of the truck (1); a rear axle (14); two back wheel mounting forks (10) supported by the rear axle (14) in such a way that they rotate about respective second axes (12) which are substantially parallel to the central plane (M); two steerable back wheels (4a, 4b) each supported by one of the mounting forks (10); steering means (26) designed to coordinate the rotation of the mounting forks (10) about their respective second axes (12); a rear counterweight (35); the rear axle (14), the mounting forks (10) and the steering means (26) forming a unit (33) which can be pre-assembled and which is supported directly by a back end (36) of the frame (2); said back end (36) also directly supporting the counterweight (35) in a position such that the pre-assembled unit (33) is located between the back end (36) and the counterweight (35); the forklift truck (1) being **characterised in that** the centre of rotation (C) of the forklift truck (1) with the steering at full lock is positioned at the point where the first common axis of rotation (A) intersects the central plane (M); and **in that** the frame (2) has a rear opening (34) providing access to the steering means (26).

2. The forklift truck according to claim 1, **characterised in that** the back end (36) comprises a pin (27) that supports both the pre-assembled unit (33) and the counterweight (35).

3. The forklift truck according to any of the foregoing claims, **characterised in that** the counterweight (35) consists of a single part which closes the back end (36).

4. The forklift truck according to claim 2 or 3, **characterised in that** the rear axle (14) comprises sheet metal parts welded to each other and is pivotally mounted on the pin (27).

5. The forklift truck according to any of the foregoing claims, **characterised in that** the front wheels (3a, 3b) are driven independently of each other by two respective transmission motors (41, 42) controlled electronically by a control unit (43) which controls both their speed and direction of rotation in accordance with the steer angles of the back wheels (4a, 4b).

6. The forklift truck according to claim 5, **characterised in that** each wheel mounting fork (10) comprises a pin (17) for actuating the mounting fork, and **in that** the input of the control unit (43) is connected to a rotary potentiometer (39) designed to provide a signal proportional to the steer angle of the back wheels (4a, 4b), the potentiometer (39) having a spindle (40) connected to one of the pins (17) of the back wheels (4a, 4b).

7. The forklift truck according any of the foregoing claims, **characterised in that** the centre of rotation (C) of the truck (1) with steering at full lock is positioned at the point where the central plane (M) intersects the first common axis of rotation (A) thanks to the fact that the front wheels (3a, 3b) can rotate in opposite directions and are driven independently of each other by two respective transmission motors (41, 42) which are electronically controlled by a control unit (43) and **characterised** also **in that** the back wheels (4a, 4b) are steered by the steering means (26), which are supported by a pin (27) of the frame (2).

## Patentansprüche

1. Gabelstapler mit geringerem Wenderadius, der Folgendes beinhaltet: einen Rahmen (2); zwei vordere Antriebsräder (3a, 3b), die so auf dem genannten Rahmen (2) montiert sind, dass sie sich um eine erste gemeinsame Drehungsachse (A) drehen, die quer zu einer Längsmittelebene (M) des Staplers (1) verläuft; eine Hinterachse (14); zwei Hinterrad-Aufhängegabeln (10), die so auf der Hinterachse (14) gelagert sind, dass sie sich um entsprechende zweite Achsen (12) drehen, die im Wesentlichen parallel zu der Mittelebene (M) sind; zwei lenkbare Hinterräder (4a, 4b), die jeweils auf einer der Aufhängegabeln (10) gelagert sind; Lenkmittel (26), die dafür ausgelegt sind, die Drehung der Aufhängegabeln (10) um ihre entsprechenden zweiten Achsen (12) zu koordinieren; sowie ein hinteres Gegengewicht (35); wobei die Hinterachse (14), die Aufhängegabeln (10) und die Lenkmittel (26) eine Einheit (33) bilden, die vormontiert werden kann und die direkt von einem hinteren Ende (36) des Rahmens (2) getragen wird; wobei ferner das genannte hintere Ende (36) auch direkt das Gegengewicht (35) derart in einer Position trägt, dass die vormontierte Einheit (33) zwischen dem hinteren Ende (36) und dem Gegengewicht (35) angeordnet ist; wobei der Gabelstapler (1) ferner **dadurch gekennzeichnet ist, dass** der Drehmittelpunkt (C) des Gabelstaplers (1) bei Volleinschlag der Lenkung an dem Punkt angeordnet ist, an dem sich die erste gemeinsame Drehungsachse (A) mit der Mittelebene (M) schneidet; und dass der Rahmen (2) eine hintere Öffnung (34) aufweist, die den Zugang zu den Lenkmitteln (26) ermöglicht.

2. Gabelstapler nach Anspruch 1, **dadurch gekennzeichnet, dass** das hintere Ende (36) einen Zapfen (27) beinhaltet, auf dem sowohl die vormontierte Einheit (33) als auch das Gegengewicht (35) gelagert ist.

3. Gabelstapler nach einem der vorhergehenden Ansprüche, **dadurch gekennzeichnet, dass** das Gegengewicht (35) aus einem einzigen Teil besteht, welches das hintere Ende (36) abschließt.

4. Gabelstapler nach Anspruch 2 oder 3, **dadurch gekennzeichnet, dass** die Hinterachse (14) aneinander geschweißte Metallblechteile beinhaltet und schwenkbar auf dem Zapfen (27) montiert ist.

5. Gabelstapler nach einem der vorhergehenden Ansprüche, **dadurch gekennzeichnet, dass** die Vorderräder (3a, 3b) unabhängig voneinander von zwei entsprechenden Getriebemotoren (41, 42) angetrieben werden, deren Steuerung elektronisch über eine Steuereinheit (43) erfolgt, welche sowohl deren Drehzahl als auch deren Drehrichtung in Abhängigkeit vom Einschlagwinkel der Hinterräder (4a, 4b) steuert.

6. Gabelstapler nach Anspruch 5, **dadurch gekennzeichnet, dass** jede Radaufhängegabel (10) einen Zapfen (17) zur Betätigung der Aufhängegabel beinhaltet, und dass der Eingang der Steuereinheit (43) an ein Drehpotentiometer (39) angeschlossen ist, das dafür ausgelegt ist, ein Signal bereitzustellen, das proportional zum Einschlagwinkel der Hinterräder (4a, 4b) ist, wobei das Potentiometer (39) eine Spindel (40) aufweist, die mit einem der Zapfen (17) der Hinterräder (4a, 4b) verbunden ist.

7. Gabelstapler nach einem der vorhergehenden Ansprüche, **dadurch gekennzeichnet, dass** der Drehmittelpunkt (C) des Staplers (1) bei Volleinschlag der Lenkung an dem Punkt angeordnet ist, an dem sich die Mittelebene (M) mit der ersten gemeinsamen Drehungsachse (A) schneidet, und dies aufgrund der Tatsache, dass die Vorderräder (3a, 3b) in gegenläufigen Richtungen drehen können und unabhängig voneinander von zwei entsprechenden Getriebemotoren (41, 42) angetrieben werden, die elektronisch von einer Steuereinheit (43) gesteuert werden, und ferner **dadurch gekennzeichnet, dass** die Hinterräder (4a, 4b) durch die Lenkmittel (26) gelenkt werden, die auf einem Zapfen (27) des Rahmens (2) gelagert sind

## Revendications

1. Un chariot élévateur à rayon de braquage réduit comprenant : un châssis (2) ; deux roues avant motrices (3a, 3b) montées sur ledit châssis (2) de manière à tourner autour d'un premier axe commun de rotation (A) transversal à un plan médian longitudinal (M) du chariot (1) ; un essieu arrière (14) ; deux fourches (10) de support des roues arrière supportées par ledit essieu arrière (14) de manière à tourner autour de deuxièmes axes (12) respectifs qui sont essentiellement parallèles au plan médian (M) ; deux roues arrière directrices (4a, 4b) supportées chacune par une des fourches de support (10) ; des moyens de direction (26) destinés à coordonner la rotation des fourches de support (10) autour des deuxièmes axes (12) respectifs ; un contrepoids arrière (35) ; l'essieu arrière (14), les fourches de support (10) et les moyens de direction (26) constituant une unité (33) qui peut être pré-assemblée et qui est directement supportée par une extrémité arrière (36) du châssis (2) ; ladite extrémité arrière (36) supportant aussi directement le contrepoids (35) dans une position telle que l'unité pré-assemblée (33) se trouve entre ladite extrémité arrière (36) et ledit contrepoids (35) ; le chariot élévateur (1) étant **caractérisé en ce que** son centre de rotation (C) en condition de braquage maximum est situé au niveau du point où le premier axe commun de rotation (A) coupe le plan médian (M) ; et **en ce que** le châssis (2) comporte une ouverture arrière (34) permettant d'accéder aux moyens de direction (26).

2. Le chariot élévateur selon la revendication 1, **caractérisé en ce que** l'extrémité arrière (36) comprend un pivot (27) qui supporte à la fois l'unité pré-assemblée (33) et le contrepoids (35).

3. Le chariot élévateur selon l'une quelconque des revendications précédentes, **caractérisé en ce que** le contrepoids (35) consiste en une pièce unique qui ferme l'extrémité arrière (36).

4. Le chariot élévateur selon la revendication 2 ou 3, **caractérisé en ce que** l'essieu arrière (14) comprend des parties en tôle soudées entre elles et est monté de façon pivotante sur le pivot (27).

5. Le chariot élévateur selon l'une quelconque des revendications précédentes, **caractérisé en ce que** les roues avant (3a, 3b) sont entraînées indépendamment l'une de l'autre par deux moteurs de transmission (41, 42) respectifs commandés électroniquement par une unité de contrôle (43) qui commande leur vitesse et leur sens de rotation en fonction des angles de braquage des roues arrière (4a, 4b).

6. Le chariot élévateur selon la revendication 5, **caractérisé en ce que** chaque fourche (10) de support des roues comprend un pivot (17) pour l'actionnement de la fourche de support correspondante, et **en ce que** l'unité de contrôle (43) est reliée en entrée à un potentiomètre rotatif (39) destiné à fournir un signal proportionnel à l'angle de braquage des roues arrière (4a, 4b), le potentiomètre (39) ayant un arbre (40) relié à un des pivots (17) des roues arrière (4a, 4b).

7. Le chariot élévateur selon l'une quelconque des revendications précédentes, **caractérisé en ce que** le centre de rotation (C) dudit chariot (1) en condition de braquage maximum est situé au niveau du point où le plan médian (M) coupe le premier axe commun de rotation (A) en vertu du fait que les roues avant (3a, 3b) peuvent tourner dans des sens opposés et sont entraînées indépendamment l'une de l'autre par deux moteurs de transmission (41, 42) respectifs qui sont commandés électroniquement par une unité de contrôle (43), et également **caractérisé en ce que** les roues arrière (4a, 4b) sont braquées par les moyens de direction (26) qui sont supportés par un pivot (27) du châssis (2).
